# EUROPEAN PATENT APPLICATION

(11) **EP 4 550 903 A1**
(43) Date of publication of application: **07.05.2025**
(21) Application number: 22948290.6
(22) Date of filing: 28.06.2022
(51) Int. Cl.: H04W 72/04

(54) **DOWNLINK TRANSMISSION METHOD AND APPARATUS, AND DEVICE AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: Dehns Germany Partnerschaft mbB
(86) International application number: PCT/CN2022/101945
(87) International publication number: WO 2024/000168

(57) **Abstract**

The present application relates to the field of mobile communications, and discloses a downlink transmission method and apparatus, and a device and a storage medium. The method comprises: configuring a first CORESET of a PDCCH for a first-type terminal, wherein the frequency domain width of the first CORESET is greater than the reception bandwidth of a control channel supported by the first-type terminal. The first CORESET having a frequency domain width greater than the reception bandwidth of the control channel supported by the first-type terminal is configured for the first-type terminal, so that an eRedCap UE can be configured with the same CORESET as a terminal structure having a normal bandwidth, and therefore, the structures of existing CORESETs can be compatible with small-bandwidth terminals, without changing the structures of the existing CORESETs.

## Description

### TECHNICAL FIELD

The present disclosure relates to the field of mobile communications, and in particular to a downlink transmission method, apparatus, device, and storage medium.

### BACKGROUND

In a Long Term Evolution (LTE) system, in order to support IoT services, two major technologies, Machine-Type Communication (MTC) and Narrow Band-Internet of Things (NB-IoT), are proposed. The two technologies are mainly aimed at low-rate, high-latency application scenarios. NB-IoT technology supports a maximum rate of several hundred kB, and MTC technology supports a maximum rate of several MB. With the development of IoT services, some services have emerged, such as video surveillance, smart homes, wearable devices, and industrial sensor monitoring. These services usually require a rate of tens to 100 MB, and the above two technologies, NB-IoT and MTC, can no longer meet the requirements of these services.

Therefore, a new user equipment (UE) is proposed in the new radio (NR) of the 5th generation mobile communication technology (5G) to meet the requirements of IoT devices that support the above services. The terminal type of Reduced Capability UE (RedCap UE) was introduced in the R17 version of the 3rd Generation Partnership Project (3GPP), and RedCap UE can meet the requirements of the above services.

Currently, the terminal type of enhanced Reduced Capability UE (eRedCap UE) has also been introduced in the R18 version of 3GPP. The eRedCap UE further reduces the applicable bandwidth of the terminal to 5MHz compared with the RedCap UE. With the reduced applicable bandwidth of the eRedCap UE, the method for configuring the control resource set (CORESET) of the physical downlink control channel (PDCCH) for the eRedCap UE needs further discussion and research.

### SUMMARY

An embodiment of the present disclosure provides a downlink transmission method, apparatus, device, and storage medium. The technical solution is as follows.

According to an aspect of the present disclosure, a downlink transmission method is provided. The method is performed by a network device, and the method includes:
configuring the first CORESET of the PDCCH for the first type of terminal,
where the frequency domain width of the first CORESET is greater than the receiving bandwidth of the control channel supported by the first type of terminal.

According to another aspect of the present disclosure, a downlink transmission method is provided. The method is performed by a first type of terminal, and the method includes:
receiving the first CORESET of the PDCCH configured by the network device,
where the frequency domain width of the first CORESET is greater than the receiving bandwidth of the control channel supported by the first type of terminal.

According to another aspect of the present disclosure, a downlink transmission method is provided. The method is performed by a first type of terminal, and the method includes:
receiving, on a target resource unit, the PDCCH in the first CORESET configured by the network device,
where the frequency domain width of the first CORESET is greater than the receiving bandwidth of the control channel supported by the first type of terminal, and the bandwidth of the target resource unit is not greater than the receiving bandwidth of the control channel supported by the first type of terminal.

According to another aspect of the present disclosure, a downlink transmission apparatus is provided, and the apparatus includes:
a sending module for configuring a first CORESET of a PDCCH for a first type of terminal,
where the frequency domain width of the first CORESET is greater than the receiving bandwidth of the control channel supported by the first type of terminal.

According to another aspect of the present disclosure, a downlink transmission apparatus is provided, and the apparatus includes:
a receiving module for receiving a first CORESET of a PDCCH configured by a network device,
where the frequency domain width of the first CORESET is greater than the receiving bandwidth of the control channel supported by the apparatus.

According to another aspect of the present disclosure, a downlink transmission apparatus is provided, and the apparatus includes:
a receiving module for receiving, on a target resource unit, a PDCCH in a first CORESET configured by a network device,
where the frequency domain width of the first CORESET is greater than the receiving bandwidth of the control channel supported by the apparatus, and the bandwidth of the target resource unit is not greater than the receiving bandwidth of the control channel supported by the apparatus.

According to another aspect of the present disclosure, a network device is provided. The network device includes: a processor; a transceiver connected to the processor; and a memory for storing executable instructions for the processor. The processor is configured to load and execute the executable instructions to implement the downlink transmission method as described in the above aspect(s).

According to another aspect of the present disclosure, a terminal is provided. The terminal includes: a processor; a transceiver connected to the processor; and a memory for storing executable instructions for the processor. The processor is configured to load and execute the executable instructions to implement the downlink transmission method as described in the above aspect(s).

According to another aspect of the present disclosure, a computer-readable storage medium is provided. The computer-readable storage medium has executable instructions stored therein. The executable instructions are loaded and executed by a processor to implement the downlink transmission method as described in the above aspect(s).

According to another aspect of the present disclosure, a chip is provided. The chip includes a programmable logic circuit and/or program instructions. When the chip is run on a computer device, the downlink transmission method as described in the above aspect(s) is implemented.

According to another aspect of the present disclosure, a computer program product or a computer program is provided. The computer program product or the computer program includes computer instructions. The computer instructions are stored in a computer-readable storage medium. The processor reads and executes the computer instructions from the computer-readable storage medium, so that the computer device performs the downlink transmission method described in the above aspect(s).

The technical solutions provided by the present disclosure include at least the following beneficial effects.

By configuring, for the first type of terminal, a first CORESET with a frequency domain width larger than the receiving bandwidth of the control channel supported by the first type of terminal, the eRedCap UE can be configured with a CORESET with the same structure as the terminal of normal bandwidth, thereby achieving an effect that the structure of the existing CORESET can be compatible with the small-bandwidth terminal without changing the structure of the existing CORESET.

### BRIEF DESCRIPTION OF THE DRAWINGS

In order to more clearly illustrate the technical solutions in the embodiments of the present disclosure, the following will briefly introduce the drawings required for the description of the embodiments. It shall be noted that the drawings described below are only some embodiments of the present disclosure. For those of ordinary skills in the art, other drawings can be obtained based on these drawings without creative work.
Fig. 1 is a schematic diagram about resource mapping for a PDCCH provided by an example embodiment of the present disclosure;
Fig. 2 is a schematic diagram of a communication system provided by an example embodiment of the present disclosure;
Fig. 3 is a flow chart of a downlink transmission method provided by an example embodiment of the present disclosure;
Fig. 4 is a flow chart of a method for determining a resource unit of a PDCCH provided by an example embodiment of the present disclosure;
Fig. 5 is a schematic diagram about trimming a resource unit provided by an example embodiment of the present disclosure;
Fig. 6 is a schematic diagram about trimming a resource unit provided by an example embodiment of the present disclosure;
Fig. 7 is a flow chart of a method for determining a resource unit of a PDCCH provided by an example embodiment of the present disclosure;
Fig. 8 is a flow chart of a downlink transmission method provided by an example embodiment of the present disclosure;
Fig. 9 is a flow chart of a method for receiving a PDCCH provided by an example embodiment of the present disclosure
Fig. 10 is a flowchart of a method for receiving a PDCCH provided by an example embodiment of the present disclosure;
Fig. 11 is a flowchart of a downlink transmission method provided by an example embodiment of the present disclosure;
Fig. 12 is a flowchart of a downlink transmission method provided by an example embodiment of the present disclosure;
Fig. 13 is a flowchart of a downlink transmission method provided by an example embodiment of the present disclosure;
Fig. 14 is a structural block diagram of a downlink transmission apparatus provided by an example embodiment of the present disclosure;
Fig. 15 is a structural block diagram of a downlink transmission apparatus provided by an example embodiment of the present disclosure;
Fig. 16 is a structural block diagram of a downlink transmission apparatus provided by an example embodiment of the present disclosure; and
Fig. 17 is a structural schematic diagram of a communication device provided by an example embodiment of the present disclosure.

### DETAILED DESCRIPTION OF THE EMBODIMENTS

In order to make the purposes, technical solutions, and advantages of the present disclosure clearer, the implementations of the present disclosure will be further described in detail in conjunction with the accompanying drawings.

Here, the example embodiments will be described in detail, and instances thereof are shown in the accompanying drawings. When the following description refers to the drawings, unless otherwise indicated, the same numbers in different drawings represent the same or similar elements. The implementations described in the following example embodiments do not represent all the implementations consistent with the present disclosure. Instead, they are only examples of apparatuses and methods consistent with some aspects of the present disclosure as detailed in the attached claims.

The terms used in the present disclosure are only for the purpose of describing specific embodiments and are not intended to limit the present disclosure. The singular forms "one", "said", and "the" used in the present disclosure and the attached claims are also intended to include plural forms, unless the context clearly indicates other meanings. It should also be understood that the term "and/or" used herein refers to and includes any or all possible combinations of one or more associated items as listed.

It should be understood that although the terms first, second, third, etc. may be used in the present disclosure to describe various information, these information should not be limited to these terms. These terms are only used to distinguish the same type of information from each other. For example, without departing from the scope of the present disclosure, the first information may also be referred to as the second information, and similarly, the second information may also be referred to as the first information. Depending on the context, the word "if" as used herein may be interpreted as "at" or "when" or "in response to".

### Introduction about RedCap UE

In the LTE system, in order to support IoT services, two major technologies, MTC and NB-IoT, are proposed. The two technologies are mainly aimed at low-rate, high-latency application scenarios, for example, scenarios such as meter reading and environmental monitoring. NB-IoT technology supports a maximum rate of several hundred kB, and MTC technology supports a maximum rate of several MB. However, with the development of IoT services, some services have emerged, such as video surveillance, smart homes, wearable devices, and industrial sensor monitoring. These services usually require a rate of tens to 100 MB, and also have relatively high requirements for transmission latency. The above-mentioned NB-IoT and MTC technologies can no longer meet the requirements of these services.

Therefore, a new type of UE is proposed in 5G NR to meet the requirements of IoT devices that support the above-mentioned services. In the R17 version of 3GPP, the terminal type RedCap UE was introduced, and the RedCap UE can meet the requirements of the above services.

### Introduction about eRedCap UE

The RedCap UE introduced in the R17 version is mainly aimed at medium-rate application scenarios. The maximum bandwidth of RedCap UE in Frequency Range 1 (FR1) is 20MHz.

For 5G NR, the terminal type eRedCap UE was further introduced in the R18 version of 3GPP. Moreover, for eRedCap UE, the applicable bandwidth of the terminal is further reduced compared with RedCap UE. For example, the terminal bandwidth of eRedCap UE is reduced from 20MHz to 5MHz compared with that of RedCap UE. For the reduced terminal bandwidth of eRedCap UE, the bandwidth in the Radio Frequency (RF) and the baseband can be reduced at the same time, or only the bandwidth in the baseband can be reduced. For example, only the frequency resources allocated to PDCCH or Physical Downlink Shared Channel (PDSCH) are limited to not exceed 5MHz.

### Introduction about PDCCH in NR system

The basic unit of a PDCCH in the NR system is Resource Element Group (REG). One REG corresponds to the size of one Physical Resource Block (PRB) (12 Resource Elements (REs)) in frequency domain, and corresponds to the size of one Orthogonal Frequency Division Multiplexing (OFDM) symbol in time domain. Multiple REGs will form a REG bundle, and one or more REG bundles will form a Control Channel Element (CCE). However, one CCE can only contain 6 REGs. In the current NR system, one PDCCH may be composed of 1, 2, 4, 8, or 16 CCEs. For one PDCCH, the number of CCEs it contains may be called the Aggregation Level (AL) or the Aggregation Degree. When the information bits of one PDCCH are fixed, the aggregation level thereof is mainly determined by the channel conditions. When the channel conditions are good, a smaller aggregation level may be used for the PDCCH. When the channel conditions are poor, a larger aggregation level needs to be selected for the PDCCH.

### Introduction about Control Resource Set (CORESET) of PDCCH

In the NR system, the transmission area (time-frequency area) where the PDCCH transmission can be performed is called the control resource set of the PDCCH. In frequency domain, the control resource set includes multiple PRBs (REGs). In the NR protocol, the number of PRBs occupied by the control resource set must be an integer multiple of 6. In time domain, the control resource set may occupy 1, 2, or 3 OFDM symbols. In addition, the control resource set may be shared by multiple PDCCHs, and the multiple PDCCHs to be transmitted may be mapped to the control resource set according to a rule for the purpose of transmission.

Before transmitting the PDCCH, the PDCCH will be mapped to the respective CCE according to a preset rule. After that, one CCE will be mapped to the REG bundle resource in the CORESET. Each CCE contains one or more REG bundles, and each CCE contains a total of 6 REGs.

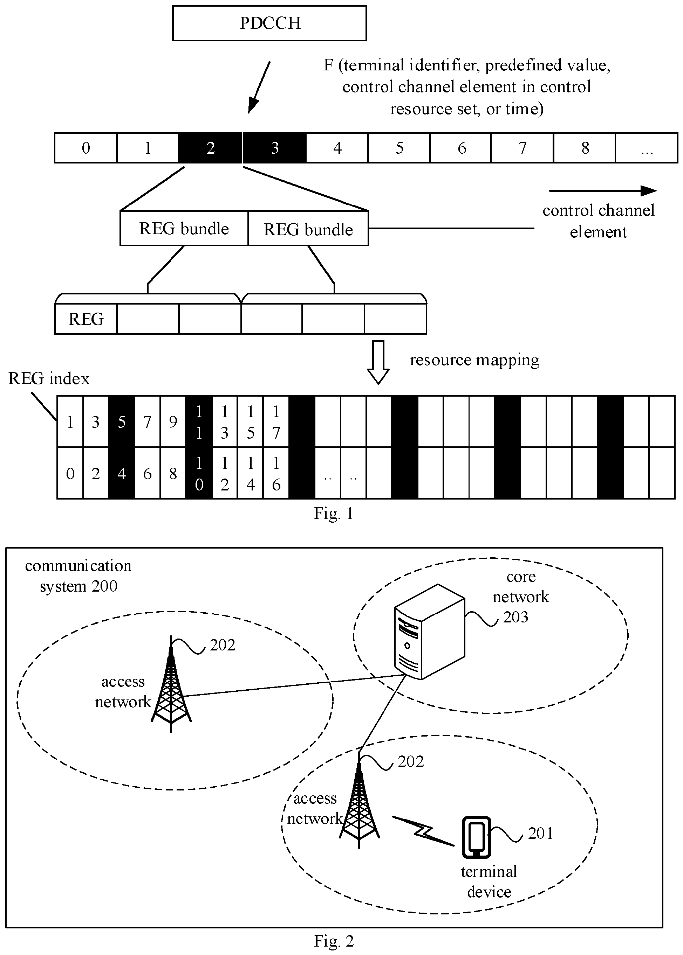

For example, Fig. 1 is a schematic diagram about resource mapping for a PDCCH provided by an example embodiment of the present disclosure. As shown in Fig. 1, the network device maps PDCCH to CCE according to the terminal identifier (UE-ID), a predefined value, CCE in CORESET, or time. Afterwards, the network device performs resource mapping from CCE to REG for PDCCH according to the resource unit configured for CORESET, that is, maps CCE of PDCCH to REG bundle. REG bundle is composed of multiple REGs, and REG bundle has a resource mapping relationship with the REG index of REG. By performing resource mapping for PDCCH according to CORESET, the resource unit of PDCCH in frequency domain can be obtained.

For eRedCap UE, there are several solutions for reducing the terminal bandwidth:
Solution 1: reducing the baseband processing bandwidth and the RF bandwidth of the terminal to 5M at the same time;
Solution 2: reducing the baseband processing bandwidth of the terminal, for example, reducing the bandwidth of the data channel, control channel and other channels of the terminal to 5MHz.

When the data channel and control channel of the terminal are reduced to 5MHz, and the sub-carrier space (SCS) = 15kHz, then for PDCCH, there are 25 available PRBs at this time. If SCS = 30kHz, then for PDCCH, there are 11 available PRBs at this time. In addition, in the NR system, the bandwidth of the CORESET corresponding to the PDCCH is configured with a granularity of 6 PRBs.

When SCS = 30kHz, and the resource unit of PDCCH in frequency domain is configured according to the current CORESET configuration mode, a maximum of 6 PRBs can be configured, and the PDCCH can only support AL = 2 at most. In this case, the coverage of PDCCH cannot be guaranteed, and the PDCCH cannot fully utilize frequency resources. Therefore, the structure of the CORESET configured for the eRedCap UE may need to be improved compared to the structure of the CORESET (existing CORESET) configured for the normal terminal (terminals other than the eRedCap UE and the RedCap UE).

The method(s) provided in the embodiments of the present disclosure configures, for the terminal (eRedCap UE), the first CORESET with a frequency domain width larger than the receiving bandwidth of the control channel supported by the terminal, and also provides a corresponding PDCCH resource mapping scheme. Thus, the eRedCap UE can be configured with the same CORESET structure as the terminal of the normal bandwidth, thereby achieving an effect that the structure of the existing CORESET can be compatible with the small-bandwidth terminal without changing the structure of the existing CORESET.

Fig. 2 is a schematic diagram of a communication system provided by an example embodiment of the present disclosure. The communication system 200 may include: a terminal 201, an access network device 202, and a core network device 203.

The number of terminals 201 is usually multiple. One or more terminals 201 may be arranged in the cell managed by each access network device 202. The terminal 201 may include various handheld devices, vehicle-mounted devices, wearable devices, computing devices, or other processing devices connected to a wireless modem, with wireless communication functions, as well as various forms of user equipment (UE), mobile station (MS), etc. In the embodiments of the present disclosure, for the convenience of description, the above-mentioned devices are collectively referred to as terminals.

The access network device 202 is a device deployed in the access network to provide wireless communication functions for the terminal 201. The access network device 202 may include various forms of macro base stations, micro base stations, relay stations, and access points. In systems using different wireless access technologies, the names of devices with access network device functions may be different. For example, in a 5G NR system, they are called gNodeB or gNB. With the evolution of communication technology, the name "access network device" may change. For the convenience of description, in the embodiments of the present disclosure, the above-mentioned devices that provide wireless communication functions for the terminal 201 are collectively referred to as access network devices. The access network device 202 and the terminal 201 may establish a connection through the air interface, so as to communicate through the connection, including the interaction of signaling and data. There may be multiple access network devices 202. Two adjacent access network devices 202 may communicate with each other by wire or wireless means. The terminal 201 may switch between different access network devices 202, that is, establish connections with different access network devices 202.

The functions of the core network device 203 are mainly to provide user connection, user management, and service carrying, and to provide an interface to the external network as a bearer network. The access network device 202 and the core network device 203 may be collectively referred to as network devices. The core network device 203 and the access network device 202 communicate with each other through some air technology. A communication relationship may be established between the terminal 201 and the core network device 203 through the access network device 202.

The "5G NR system" in the embodiments of the present disclosure may also be referred to as a 5G system or an NR system, but those skilled in the art may understand the meaning thereof. The technical solutions described in the embodiments of the present disclosure may be applicable to the 5G NR system, and may also be applicable to the subsequent evolution system(s) of the 5G NR system.

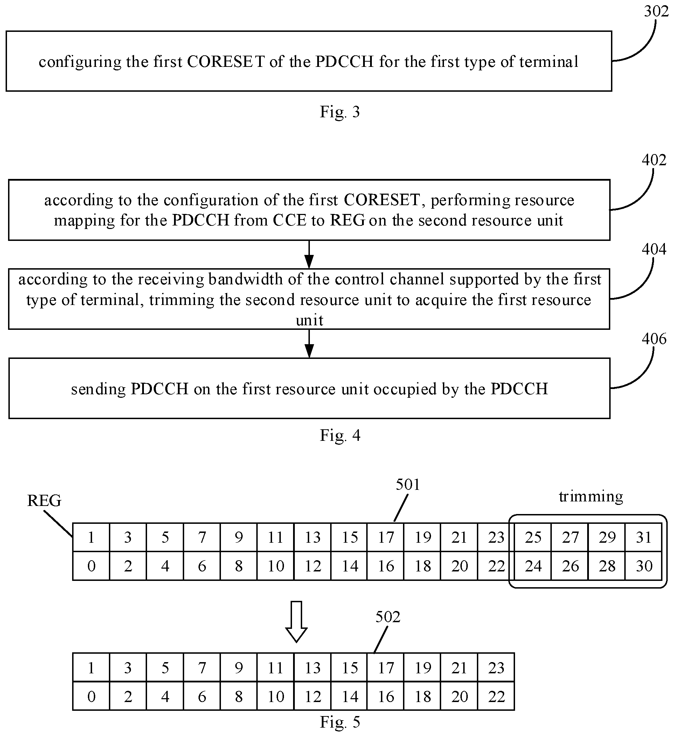

Fig. 3 shows a flow chart of a downlink transmission method provided by an embodiment of the present disclosure. The method may be applied to a network device. The method includes:
Step 302: configuring the first CORESET of the PDCCH for the first type of terminal.

The frequency domain width of the first CORESET configured by the network device for the first type of terminal is greater than the receiving bandwidth of the control channel supported by the first type of terminal. That is, the bandwidth of the resource unit of the PDCCH in frequency domain, which is determined according to the first CORESET, is greater than the receiving bandwidth of the control channel supported by the first type of terminal.

When the first type of terminal is an eRedCap UE, the utilization rate of the frequency resources of the PDCCH for the eRedCap UE can be improved, and the coverage of the PDCCH is also improved accordingly.

Optionally, the type information of the first type of terminal is different from the type information of the second type of terminal and the type information of the third type of terminal, and the terminal capabilities of the second type of terminal and the third type of terminal are greater than the terminal capability of the first type of terminal.

For example, the above-mentioned terminal capability refers to the transceiving bandwidth supported by the terminal during communication. For example, it is the receiving bandwidth of the control channel (such as PDCCH) supported by the terminal. The terminal reports its capability information to the network device, so that the network device learns the terminal capability of the terminal, and the network device can also determine the terminal type of the terminal based on the terminal information.

Optionally, the first type of terminal is an eRedCap UE, the second type of terminal is a RedCap UE, and the third type of terminal is a non-lightweight terminal (also referred to as a normal terminal). The maximum transceiving bandwidth supported by the eRedCap UE is smaller than the maximum transceiving bandwidth supported by the RedCap UE and the maximum transceiving bandwidth supported by the non-lightweight terminal. The non-lightweight terminal is a terminal other than the eRedCap UE and the RedCap UE.

In summary, the method provided in this embodiment configures, for the first type of terminal, a first CORESET with a frequency domain width larger than the receiving bandwidth of the control channel supported by the first type of terminal, so that the eRedCap UE can be configured with a CORESET with the same structure as the terminal of the normal bandwidth, thereby achieving an effect that the structure of the existing CORESET is compatible with the small-bandwidth terminal without changing the structure of the existing CORESET.

After configuring the first CORESET of the PDCCH for the first type of terminal, the network device will process the resource mapping for the PDCCH corresponding to the first type of terminal according to the first CORESET configured for the first type of terminal. Thereby, the resource unit occupied by the PDCCH corresponding to the first type of terminal in frequency domain is acquired, and then the resource unit of the PDCCH is used to send the PDCCH.

Optionally, the network device can configure the above-mentioned first CORESET for the first type of terminal, and the network device can also configure the second CORESET for the first type of terminal. The frequency domain width of the second CORESET is not greater than the receiving bandwidth of the control channel supported by the first type of terminal.

Optionally, in response to the frequency domain width of the CORESET configured for the first type of terminal being greater than the receiving bandwidth of the control channel supported by the first type of terminal (that is, the case where the first CORESET is configured for the first type of terminal), the network device uses the first processing mode to process the resource mapping for the PDCCH. In response to the frequency domain width of the CORESET configured for the first type of terminal being not larger than the receiving bandwidth of the control channel supported by the first type of terminal (that is, the case where the second CORESET is configured for the first type of terminal), the network device uses the second processing mode to process the resource mapping for the PDCCH.

The first processing mode is different from the second processing mode. The first processing mode corresponds to the first type of terminal, and is the PDCCH mapping mode used by the network device when the first CORESET is configured for the first type of terminal. The second processing mode corresponds to the first type of terminal, and is the PDCCH mapping mode used by the network device when the second CORESET is configured for the first type of terminal.

Optionally, the second processing mode is also a PDCCH mapping mode corresponding to the second type of terminal or the third type of terminal. For example, the first type of terminal is an eRedCap UE, the second type of terminal is a RedCap UE, and the third type of terminal is a non-lightweight terminal (also referred to as a normal terminal).

The network device processes the resource mapping for the PDCCH in the first processing mode, so that the resource unit occupied by the PDCCH is acquired. Optionally, the resource unit occupied by the PDCCH, which is determined by the network device, is determined according to the resource unit configured for the first CORESET.

The network device processes the resource mapping for the PDCCH in the second processing mode, so that the resource unit occupied by the PDCCH is acquired. The resource unit occupied by the PDCCH, which is determined by the network device, is the resource unit configured for the second CORESET. For example, in the second processing mode, the network device performs resource mapping for the PDCCH from CCE to REG according to the resource unit configured for the second CORESET, thereby acquiring the resource unit occupied by the PDCCH in frequency domain.

For the first processing mode, the network device may adopt one of the following schemes to determine the resource unit occupied by the PDCCH corresponding to the first type of terminal in frequency domain.

### (1) Scheme for trimming resource unit of PDCCH

In this scheme, the first resource unit occupied by the PDCCH, which is determined by the network device, is acquired by the network device trimming the second resource unit configured for the first CORESET. The bandwidth of the first resource unit is not greater than the receiving bandwidth of the control channel supported by the first type of terminal.

Since the frequency domain width of the first CORESET is greater than the receiving bandwidth of the control channel supported by the first type of terminal, the bandwidth of the second resource unit is greater than the receiving bandwidth of the control channel supported by the first type of terminal. The network device trims the second resource unit, so that the first type of terminal can receive the PDCCH sent by the network device on the first resource unit. Optionally, in this case, the first type of terminal may pad the information corresponding to the trimmed resource unit to acquire the complete PDCCH information.

Optionally, the first resource unit is acquired by trimming the second resource unit according to the receiving bandwidth of the control channel supported by the first type of terminal. For example, the network device trims the second resource unit, so that the bandwidth of the trimmed second resource unit is adapted to the receiving bandwidth of the control channel supported by the first type of terminal, thereby acquiring the first resource unit of the PDCCH. For example, the bandwidth of the first resource unit of the PDCCH, which is acquired by trimming the second resource unit according to the receiving bandwidth of the control channel supported by the first type of terminal, is the same as the receiving bandwidth of the control channel supported by the first type of terminal.

In some embodiments, Fig. 4 shows a flowchart of a method for determining the resource unit of the PDCCH provided by an embodiment of the present disclosure. The method includes steps 402, 404, and 406.

Step 402: according to the configuration of the first CORESET, performing resource mapping for the PDCCH from CCE to REG on the second resource unit.

The network device can implement resource mapping for the PDCCH from CCE to REG according to the resource unit configured for the first CORESET, so as to obtain the REG constituting the PDCCH located in the first CORESDET, that is, to obtain the second resource unit.

Step 404: according to the receiving bandwidth of the control channel supported by the first type of terminal, trimming the second resource unit to acquire the first resource unit.

Optionally, the bandwidth of the first resource unit, which is obtained by the network device trimming the second resource unit according to the receiving bandwidth of the control channel supported by the first type of terminal, is the same as the receiving bandwidth of the control channel supported by the first type of terminal. The network device acquires the first resource unit by trimming the second resource unit, so that the PDCCH located in the first CORESET can be mapped to the transmission bandwidth supported by the first type of terminal.

Optionally, when the network device sends the PDCCH on the first resource unit, it will discard the information corresponding to the trimmed resource unit. This may be regarded as the case that the network device discards the trimmed resource unit when sending the PDCCH.

Optionally, the network device trims the second resource unit according to at least one of the following granularities:
- RE;
- REG;
- REG bundle;
- N REGs; or
- CCE.

The network device may trim the second resource unit according to RE, trim the second resource unit according to REG, trim the second resource unit according to REG bundle, trim the second resource unit according to N REGs, or trim the second resource unit according to CCE. The network device may also trim the second resource unit according to several of the above granularities to obtain the first resource unit occupied by the PDCCH in frequency domain.

Optionally, the trimmed resource unit includes at least one of the following:
- a resource unit indicated by the upper network; or
- a resource unit determined by the network device according to a preset rule.

Optionally, the network device is an access network device, and the upper network refers to a core network device. The upper network instructs the network device about the trimmed resource unit by sending an indication message to the network device. For example, the preset rule indicates that when the network device trims the second resource unit, it trims a resource unit, which is located outside the receiving bandwidth of the control channel supported by the first type of terminal, among the second resource unit. For example, the tail of the second resource unit is a resource unit located outside the receiving bandwidth of the control channel supported by the first type of terminal.

For example, Fig. 5 is a schematic diagram about trimming a resource unit provided by an example embodiment of the present disclosure. As shown in Fig. 5, the granularity of the second resource unit 501 is REG, and the network device trims the second resource unit 501 according to REG. When trimming the second resource unit 501, the network device trims the resource unit at the bottom of the second resource unit 501 according to a preset rule. That is, the REGs with REG index of 24, 25, 26, 27, 28, 29, 30, and 31 are trimmed to obtain the first resource unit 502. The bandwidth of the first resource unit 502 is the same as the receiving bandwidth of the control channel supported by the first type of terminal.

Optionally, the trimmed resource unit include at least one of the following:
- a continuous resource unit; or
- a dispersed resource unit.

Optionally, when the network device trims the second resource unit, it trims a plurality of continuous resource units in the second resource unit, or trims a single resource unit in the second resource unit in a dispersed way, or trims a plurality of continuous resource units and dispersed resource units at the same time.

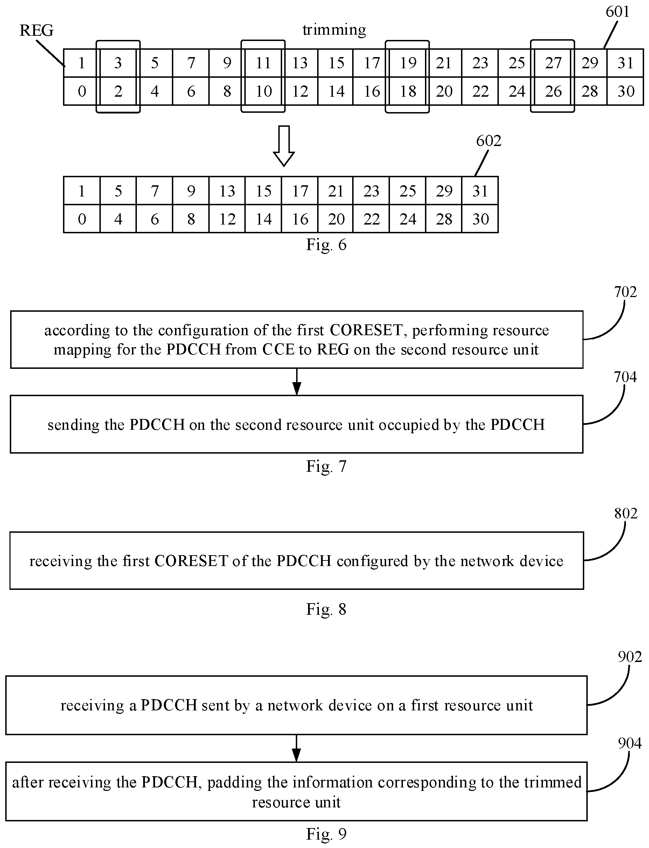

For example, Fig. 6 is a schematic diagram about trimming a resource unit provided by an example embodiment of the present disclosure. As shown in Fig. 6, the granularity of the second resource unit 601 is REG, and the network device trims the second resource unit 601 according to REG. When trimming the second resource unit 601, the network device trims 4 groups of continuous resource units (with each group including 2 continuous resource units) in a dispersed way. The network device trims REGs with REG index of 2, 3, 10, 11, 18, 19, 26, and 27, thereby acquiring the first resource unit 602. The bandwidth of the first resource unit 602 is the same as the receiving bandwidth of the control channel supported by the first type of terminal.

Optionally, the trimmed resource unit remains fixed in time domain, or changes in time domain. For example, the resource units trimmed by the network device in all subframes in the second resource unit are having REG index=10 and REG index=11. Alternatively, the network device may also trim the resource units with REG index=1 and REG index=2 in subframe 1 of the second resource unit, and trim the resource units with REG index=3 and REG index=4 in subframe 2 of the second resource unit.

It should be noted that when the network device trims the second resource unit, the trimmed resource unit meets one or more of the above rules. That is, the network device may trim the second resource unit according to one or more of the above rules.

Step 406: sending PDCCH on the first resource unit occupied by PDCCH.

Optionally, when the network device sends PDCCH according to the trimmed resource unit acquired by trimming the resource unit, the first type of terminal will pad the information corresponding to the trimmed resource unit to acquire the complete PDCCH information.

It should be noted that the information corresponding to the resource unit trimmed by the network device is useful information, or the resource unit trimmed by the network device does not carry information. In the case where the trimmed resource unit carries useful information, since the network device uses channel coding for the transmission of PDCCH information, the first type of terminal may correct some errors in the transmission through channel coding. Therefore, even if part of the useful information of PDCCH is "trimmed" off, the first type of terminal can still rely on channel coding to recover the above useful information.

Optionally, the first type of terminal uses a preset bit to pad the information corresponding to the trimmed resource unit. For example, the preset bit is 0 or 1. Optionally, the collection including the resource unit, which is padded with information by the first type of terminal, and the second resource unit is the first resource unit. That is, the resource unit, which is padded with information by the first type of terminal, is the same as the trimmed resource unit.

In summary, the method provided in this embodiment configures, for a first type of terminal, a first CORESET with a frequency domain width larger than the receiving bandwidth of the control channel supported by the first type of terminal, and further provides a corresponding PDCCH resource mapping scheme, so that the eRedCap UE can be configured with a CORESET with the same structure as the terminal with normal bandwidth. Thereby, an effect is achieved that the structure of the existing CORESET is compatible with the small-bandwidth terminal without changing the structure of the existing CORESET.

### (2) Scheme for resource unit without trimmed PDCCH

In this scheme, the second resource unit occupied by the PDCCH corresponding to the first type of terminal as determined by the network device is the resource unit configured by the network device for the first CORESET. That is, the bandwidth of the second resource unit occupied by the PDCCH as determined by the network device is the same as the bandwidth of the resource unit configured by the network device for the first CORESET, and both of them are larger than the receiving bandwidth of the control channel supported by the first type of terminal. The network device may determine the resource unit occupied by the PDCCH corresponding to the first type of terminal based on the resource unit configured for the first CORESET.

In some embodiments, Fig. 7 shows a flow chart of a method for determining a resource unit of a PDCCH provided by an embodiment of the present disclosure. The method includes steps 702, 704.

Step 702: according to the configuration of the first CORESET, performing resource mapping for the PDCCH from CCE to REG on the second resource unit.

The network device may implement resource mapping for the PDCCH from CCE to REG according to the resource unit configured for the first CORESET, so as to obtain the REG constituting the PDCCH located in the first CORESDET, that is, to obtain the second resource unit.

Step 704: sending the PDCCH on the second resource unit occupied by the PDCCH.

Optionally, in the case where the network device does not trim the resource unit, but obtains the second resource unit of the PDCCH by mapping based on the first CORESET, the first type of terminal may receive the PDCCH according to a partial resource unit of the second resource unit, and pad the information corresponding to unreceived resource unit, so as to obtain the complete PDCCH information.

It should be noted that the information corresponding to the resource unit not received by the first type of terminal is useful information, or the resource unit not received by the first type of terminal does not carry information. In the case where the unreceived resource unit carries useful information, since the network device uses channel coding for the transmission of PDCCH information, the first type of terminal may correct some errors in the transmission through channel coding. Therefore, even if some useful information of PDCCH is not received by the first type of terminal, the first type of terminal can still rely on channel coding to recover the above useful information.

Optionally, the frequency domain width of the partial resource unit is not greater than the receiving bandwidth of the control channel supported by the first type of terminal. For example, the frequency domain width of the partial resource unit is equal to the receiving bandwidth of the control channel supported by the first type of terminal. The first type of terminal uses a preset bit to pad the information corresponding to the unreceived resource unit. For example, the preset bit is 0 or 1. Optionally, the collection including the resource unit, which is padded with information by the first type of terminal, and the partial resource unit is the second resource unit. That is, the resource unit, which is padded with information by the first type of terminal, is the differential resource unit between the partial resource unit and the second resource unit.

To sum up, the method provided in this embodiment configures, for the terminal, a first CORESET with a frequency domain width larger than the receiving bandwidth of the control channel supported by the terminal, and also provides a corresponding PDCCH resource mapping scheme. Thereby, the existing first CORESET is enabled to be compatible with a small-bandwidth terminal without changing the structure of the existing first CORESET.

Fig. 8 shows a flow chart of a downlink transmission method provided by an embodiment of the present disclosure. The method may be applied to a first type of terminal. The method includes:
step 802: receiving the first CORESET of the PDCCH configured by the network device.

The frequency domain width of the first CORESET configured by the network device for the first type of terminal is greater than the receiving bandwidth of the control channel supported by the first type of terminal. That is, the bandwidth of the resource unit of the PDCCH in frequency domain as determined according to the first CORESET is greater than the receiving bandwidth of the control channel supported by the first type of terminal.

In the case where the first type of terminal is an eRedCap UE, the utilization rate of the frequency resource of the PDCCH for the eRedCap UE can be improved, and the coverage of the PDCCH is also improved accordingly.

Optionally, the type information of the first type of terminal is different from the type information of the second type of terminal and the type information of the third type of terminal, and the terminal capabilities of the second type of terminal and the third type of terminal are greater than the terminal capability of the first type of terminal.

For example, the above terminal capability refers to the transceiving bandwidth supported by the terminal during communication. For example, it is the receiving bandwidth of the control channel (such as PDCCH) supported by the terminal. The terminal reports its capability information to the network device, so that the network device learns the terminal capability of the terminal, and the network device can also determine the terminal type of the terminal according to the terminal information.

Optionally, the first type of terminal is an eRedCap UE, the second type of terminal is a RedCap UE, and the third type of terminal is a non-lightweight terminal (also called a normal terminal). The maximum transceiving bandwidth supported by the eRedCap UE is less than the maximum transceiving bandwidth supported by the RedCap UE and the maximum transceiving bandwidth supported by the non-lightweight terminal. The non-lightweight terminal is a terminal other than the eRedCap UE and the RedCap UE.

In summary, the method provided in this embodiment configures, for the first type of terminal, the first CORESET with a frequency domain width larger than the receiving bandwidth of the control channel supported by the first type of terminal, so that the eRedCap UE can be configured with the same structure of CORESET as the terminal of the normal bandwidth, thereby achieving an effect that the structure of the existing CORESET can be compatible with the small-bandwidth terminal without changing the structure of the existing CORESET.

After configuring the first CORESET of the PDCCH for the first type of terminal, the network device processes resource mapping for the PDCCH corresponding to the first type of terminal according to the first CORESET configured for the first type of terminal, thereby acquiring the resource unit occupied by the PDCCH corresponding to the first type of terminal in frequency domain. Then, according to the determined resource unit occupied by the PDCCH in frequency domain, the resource unit occupied by the PDCCH, which is sent to the first type of terminal, in frequency domain can be determined, and then the resource unit is used to send the PDCCH to the first type of terminal.

The network device can trim the second resource unit configured for the first CORESET, thereby obtaining the first resource unit occupied by the PDCCH in frequency domain, and use the first resource unit to send the PDCCH. Alternatively, the network device determines the second resource unit occupied by the PDCCH in frequency domain according to the resource unit configured for the first CORESET, and uses the second resource unit to send the PDCCH.

### (1) Scheme for the first type of terminal to receive PDCCH using the first resource unit

In some embodiments, Fig. 9 shows a flow chart of a method for receiving a PDCCH provided by an embodiment of the present disclosure. The method includes steps 902, 904.

Step 902: receiving a PDCCH sent by a network device on a first resource unit.

The first resource unit is acquired by trimming the second resource unit by the network device, the second resource unit is a resource unit configured for the first CORESET, and the bandwidth of the first resource unit is not greater than the receiving bandwidth of the control channel supported by the first type of terminal.

Optionally, the network device may implement resource mapping for the PDCCH from CCE to REG according to the resource unit configured for the first CORESET, so as to obtain the REG constituting the PDCCH located in the CORESDET, that is, to obtain the second resource unit.

Optionally, the first resource unit is obtained by trimming the second resource unit by the network device according to the receiving bandwidth of the control channel supported by the first type of terminal. Optionally, the bandwidth of the first resource unit is the same as the receiving bandwidth of the control channel supported by the first type of terminal.

Step 904: after receiving the PDCCH, padding the information corresponding to the trimmed resource unit.

When the network device sends PDCCH according to the trimmed resource unit which is acquired by trimming the resource unit, the first type of terminal will pad the information corresponding to the trimmed resource unit to obtain the complete PDCCH information.

It should be noted that the information corresponding to the resource unit trimmed by the network device is useful information, or the resource unit trimmed by the network device does not carry information. In the case where the trimmed resource unit carries useful information, since the network device uses channel coding for the transmission of PDCCH information, the first type of terminal can correct some errors in the transmission through channel coding. Therefore, even if part of the useful information of PDCCH is "trimmed" off, the first type of terminal can still rely on channel coding to recover the above useful information.

Optionally, after receiving PDCCH, the first type of terminal will use a preset bit to pad the information corresponding to the trimmed resource unit. For example, the preset bit is 0 or 1. Optionally, the collection including the resource unit, which is padded with information by the first type of terminal, and the second resource unit is the first resource unit. That is, the resource unit, which is padded with information by the first type of terminal, is the same as the trimmed resource unit.

In summary, the method provided in this embodiment configures, for the first type of terminal, a first CORESET with a frequency domain width larger than the receiving bandwidth of the control channel supported by the first type of terminal, and also provides a corresponding PDCCH receiving scheme, so that the eRedCap UE can be configured with a CORESET with the same structure as the terminal of the normal bandwidth. Thereby, the structure of the existing CORESET is enabled to be compatible with the small-bandwidth terminal without changing the structure of the existing CORESET.

### (2) Scheme for the first type of terminal to receive PDCCH using a partial resource unit of the second resource unit

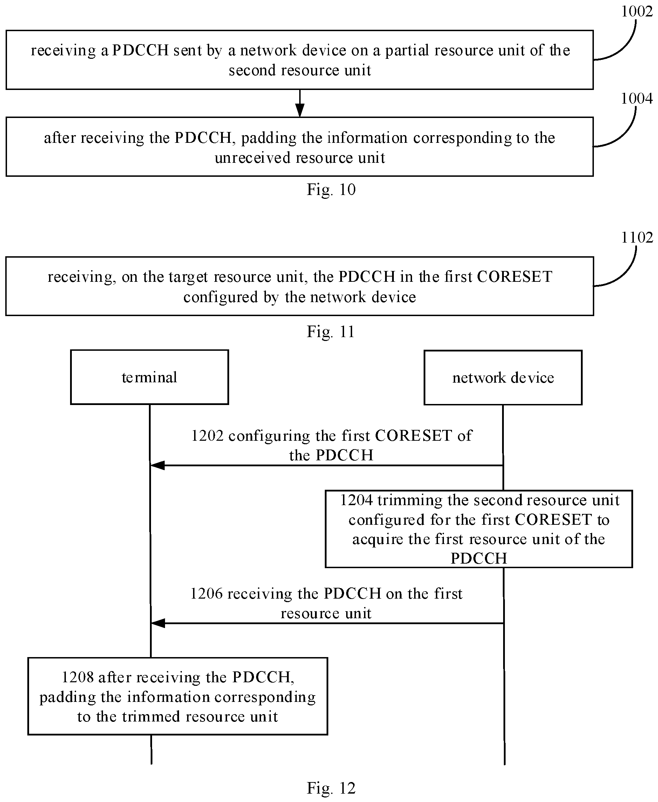

In some embodiments, Fig. 10 shows a flow chart of a method for receiving a PDCCH provided by an embodiment of the present disclosure. The method includes steps 1002, 1004.

Step 1002: receiving a PDCCH sent by a network device on a partial resource unit of the second resource unit.

The second resource unit is a resource unit configured for the first CORESET. Optionally, the network device may implement resource mapping for the PDCCH from CCE to REG according to the resource unit configured for the first CORESET, so as to obtain the REG constituting the PDCCH located in the CORESDET, that is, to obtain the second resource unit.

The frequency domain width of the partial resource unit is not greater than the receiving bandwidth of the control channel supported by the first type of terminal. Optionally, the frequency domain width of the partial resource unit is equal to the receiving bandwidth of the control channel supported by the first type of terminal.

Optionally, the partial resource unit includes at least one of the following:
- a resource unit determined by the first type of terminal;
- a resource unit indicated by the network device.

Optionally, the network device indicates the partial resource unit in the second resource unit by sending an indication message to the first type of terminal. The first type of terminal determines the partial resource unit according to actual conditions or a preset rule. For example, the preset rule indicates that the first type of terminal determines the partial resource unit at the head of the second resource unit according to the bandwidth of the control channel supported by the first type of terminal.

Step 1004: after receiving the PDCCH, padding the information corresponding to the unreceived resource unit.

In the case where the network device does not trim the resource unit, but acquires the second resource unit of the PDCCH by mapping according to the first CORESET, the first type of terminal will receive the PDCCH according to the partial resource unit of the second resource unit, and pad the information corresponding to the unreceived resource unit, thereby obtaining the complete PDCCH information.

It should be noted that the information corresponding to the resource unit not received by the first type of terminal is useful information, or the resource unit not received by the first type of terminal does not carry information. In the case where the unreceived resource unit carries useful information, since the network device uses channel coding for the transmission of PDCCH information, the first type of terminal can correct some errors in the transmission through channel coding. Therefore, even if part of the useful information of PDCCH is not received by the first type of terminal, the first type of terminal can still rely on channel coding to recover the above useful information.

Optionally, after receiving PDCCH, the first type of terminal will use a preset bit to pad the information corresponding to the unreceived resource unit. For example, the preset bit is 0 or 1. Optionally, the collection including the resource unit, which is padded with information by the first type of terminal, and the partial resource unit is the second resource unit. That is, the resource unit, which is padded with information by the first type of terminal, is the differential resource unit between the partial resource unit and the second resource unit.

To sum up, the method provided in this embodiment configures, for the first type of terminal, a first CORESET with a frequency domain width larger than the receiving bandwidth of the control channel supported by the first type of terminal, and also provides a corresponding PDCCH receiving scheme, so that the eRedCap UE can be configured with a CORESET with the same structure as the terminal of the normal bandwidth. Thereby, the structure of the existing CORESET is enabled to be compatible with the small-bandwidth terminal without changing the structure of the existing CORESET.

Fig. 11 shows a flow chart of a downlink transmission method provided by an embodiment of the present disclosure. The method may be applied to a first type of terminal. The method includes:
step 1102: receiving, on the target resource unit, the PDCCH in the first CORESET configured by the network device.

The frequency domain width of the first CORESET configured by the network device for the first type of terminal is greater than the receiving bandwidth of the control channel supported by the first type of terminal. That is, the bandwidth of the resource unit of the PDCCH in frequency domain as determined according to the first CORESET is greater than the receiving bandwidth of the control channel supported by the first type of terminal. The bandwidth of the target resource unit is not greater than the receiving bandwidth of the control channel supported by the first type of terminal.

When the first type of terminal is an eRedCap UE, the utilization rate of the frequency resource of the PDCCH for the eRedCap UE can be improved, and the coverage of the PDCCH is also improved accordingly.

Optionally, the type information of the first type of terminal is different from the type information of the second type of terminal and the type information of the third type of terminal, and the terminal capabilities of the second type of terminal and the third type of terminal are greater than the terminal capability of the first type of terminal.

Optionally, the first type of terminal is an eRedCap UE, the second type of terminal is a RedCap UE, and the third type of terminal is a non-lightweight terminal (also referred to as a normal terminal). The maximum transceiving bandwidth supported by the eRedCap UE is less than the maximum transceiving bandwidth supported by the RedCap UE and the maximum transceiving bandwidth supported by the non-lightweight terminal. The non-lightweight terminal is a terminal other than the eRedCap UE and the RedCap UE.

Optionally, the target resource unit is the first resource unit, and the first resource unit is acquired by the network device trimming the second resource unit configured for the first CORESET. Optionally, the first resource unit is acquired by the network device trimming the second resource unit according to the receiving bandwidth of the control channel supported by the first type of terminal. Optionally, the bandwidth of the first resource unit is the same as the receiving bandwidth of the control channel supported by the first type of terminal.

After the first type of terminal receives the PDCCH on the first resource unit, it will pad the information corresponding to the trimmed resource unit.

Optionally, the target resource unit is a partial resource unit of the second resource unit, and the second resource unit is a resource unit configured by the network device for the first CORESET. The frequency domain width of the partial resource unit is not greater than the receiving bandwidth of the control channel supported by the first type of terminal. Optionally, the frequency domain width of the partial resource unit is equal to the receiving bandwidth of the control channel supported by the first type of terminal.

Optionally, the partial resource unit includes at least one of the following:
- a resource unit determined by the first type of terminal;
- a resource unit indicated by the network device.

After the first type of terminal receives the PDCCH on the partial resource unit of the second resource unit, it will pad the information corresponding to the unrecevied resource unit.

In summary, the method provided in this embodiment configures, for the first type of terminal, a first CORESET with a frequency domain width larger than the receiving bandwidth of the control channel supported by the first type of terminal, and also provides a corresponding PDCCH receiving scheme, so that the eRedCap UE can be configured with the same CORESET as the terminal structure of the normal bandwidth. Thereby, the structure of the existing CORESET is enabled to be compatible with the small-bandwidth terminal without changing the structure of the existing CORESET.

The method provided in the embodiments of the present disclosure configures, for the first type of terminal, a first CORESET with a frequency domain width larger than the receiving bandwidth of the control channel supported by the first type of terminal, and also provides corresponding PDCCH resource mapping and PDCCH receiving scheme, so that the eRedCap UE can be configured with the same structure of CORESET as the terminal of the normal bandwidth. Thereby, the structure of the existing CORESET is enabled to be compatible with the small-bandwidth terminal without changing the structure of the existing CORESET. Specifically, this may be divided into the following two cases:
(1) the network device sends the PDCCH by trimming the resource unit of the PDCCH;
(2) the network device does not trim the resource unit of the PDCCH, and the terminal receives the PDCCH on a partial resource unit of the PDCCH.

### For the first case above

Fig. 12 shows a flow chart of a downlink transmission method provided by an embodiment of the present disclosure. The method may be applied to the communication system shown in Fig. 2. The method includes steps 1202, 1204, 1206, 1208.

Step 1202: the network device configures the first CORESET of the PDCCH for the first type of terminal.

The frequency domain width of the first CORESET configured by the network device for the first type of terminal is larger than the receiving bandwidth of the control channel supported by the first type of terminal. That is, the bandwidth of the resource unit of the PDCCH in frequency domain as determined by the first CORESET is greater than the receiving bandwidth of the control channel supported by the first type of terminal.

Optionally, the type information of the first type of terminal is different from the type information of the second type of terminal and the type information of the third type of terminal, and the terminal capabilities of the second type of terminal and the third type of terminal are greater than the terminal capability of the first type of terminal.

Optionally, the first type of terminal is an eRedCap UE, the second type of terminal is a RedCap UE, and the third type of terminal is a non-lightweight terminal (also referred to as a normal terminal). The maximum transceiving bandwidth supported by the eRedCap UE is less than the maximum transceiving bandwidth supported by the RedCap UE and the maximum transceiving bandwidth supported by the non-lightweight terminal. The non-lightweight terminal is a terminal other than the eRedCap UE and the RedCap UE.

Step 1204: the network device trims the second resource unit configured for the first CORESET to acquire the first resource unit of the PDCCH.

The first resource unit occupied by the PDCCH as determined by the network device is acquired by the network device trimming the second resource unit configured for the first CORESET. The bandwidth of the first resource unit is not greater than the receiving bandwidth of the control channel supported by the first type of terminal.

Since the frequency domain width of the first CORESET is greater than the receiving bandwidth of the control channel supported by the first type of terminal, the bandwidth of the second resource unit is greater than the receiving bandwidth of the control channel supported by the first type of terminal. The network device trims the second resource unit, so that the first type of terminal can receive the PDCCH sent by the network device on the first resource unit.

Optionally, the first resource unit is acquired by the network device trimming the above-mentioned second resource unit according to the receiving bandwidth of the control channel supported by the first type of terminal. For example, the network device trims the second resource unit, so that the bandwidth of the trimmed second resource unit is adapted to the receiving bandwidth of the control channel supported by the first type of terminal (the bandwidth of the trimmed second resource unit is less than or equal to the receiving bandwidth of the control channel supported by the first type of terminal), thereby acquiring the first resource unit of the PDCCH. For example, the bandwidth of the first resource unit of the PDCCH, which is obtained by trimming the second resource unit according to the receiving bandwidth of the control channel supported by the first type of terminal, is the same as the receiving bandwidth of the control channel supported by the first type of terminal.

Optionally, the network device performs resource mapping for the PDCCH from CCE to REG according to the resource unit configured for the first CORESET, thereby acquiring the second resource unit. Then, the second resource unit is trimmed according to the receiving bandwidth of the control channel supported by the first type of terminal, thereby obtaining the first resource unit.

The network device may implement resource mapping for the PDCCH from CCE to REG according to the resource unit configured for the first CORESET, so as to obtain the REG constituting the PDCCH located in the CORESET, that is, to obtain the second resource unit. Optionally, the bandwidth of the first resource unit, which is obtained by trimming the second resource unit according to the receiving bandwidth of the control channel supported by the first type of terminal, is the same as the receiving bandwidth of the control channel supported by the first type of terminal.

Optionally, when the network device sends the PDCCH on the first resource unit, it will discard the information corresponding to the trimmed resource unit.

Optionally, the network device trims the second resource unit according to at least one of the following granularities:
- RE;
- REG;
- REG bundle;
- N REGs;
- CCE.

The network device may trim the second resource unit according to RE, trim the second resource unit according to REG, trim the second resource unit according to REG bundle, trim the second resource unit according to N REGs, or trim the second resource unit according to CCE. The network device may also trim the second resource unit according to several of the above granularities to obtain the first resource unit occupied by the PDCCH in frequency domain.

Optionally, the trimmed resource unit includes at least one of the following:
- a resource unit indicated by the upper network;
- a resource unit determined by the network device according to a preset rule.

Optionally, the network device is an access network device, and the upper network refers to a core network device. The upper network indicates the resource unit trimmed by the network device by sending an indication message to the network device. For example, the preset rule indicates that when the network device trims the second resource unit, it will trim the resource unit, which is located outside the receiving bandwidth of the control channel supported by the first type of terminal, among the second resource unit.

Optionally, the trimmed resource unit includes at least one of the following:
- continuous resource units;
- dispersed resource units.

Optionally, when the network device trims the second resource unit, it trims multiple continuous resource units in the second resource unit, or trims a single resource unit in the second resource unit in a dispersed way, or trims multiple continuous resource units and dispersed resource units at the same time.

Optionally, the trimmed resource unit remains fixed in time domain, or changes in time domain.

It should be noted that when the network device trims the second resource unit, the trimmed resource unit satisfies one or more of the above rules. That is, the network device may trim the second resource unit according to one or more of the above rules.

Step 1206: the first type of terminal receives the PDCCH sent by the network device on the first resource unit.

The first resource unit is acquired by the network device trimming the second resource unit, the second resource unit is a resource unit configured for the first CORESET, and the bandwidth of the first resource unit is not greater than the receiving bandwidth of the control channel supported by the first type of terminal.

Step 1208: after receiving the PDCCH, the first type of terminal pads the information corresponding to the trimmed resource unit.

When the network device sends PDCCH according to the trimmed resource unit acquired by trimming the resource unit, the first type of terminal will pad the information corresponding to the trimmed resource unit to obtain the complete PDCCH information.

It should be noted that the information corresponding to the resource unit trimmed by the network device is useful information, or the resource unit trimmed by the network device does not carry information. In the case where the trimmed resource unit carries useful information, since the network device uses channel coding for the transmission of PDCCH information, the first type of terminal can correct some errors in the transmission through channel coding. Therefore, even if part of the useful information of PDCCH is "trimmed" off, the first type of terminal can still rely on channel coding to recover the above useful information.

Optionally, after receiving PDCCH, the first type of terminal will use a preset bit to pad the information corresponding to the trimmed resource unit. For example, the preset bit is 0 or 1. Optionally, the collection including the resource unit, which is padded with information by the first type of terminal, and the second resource unit is the first resource unit. That is, the resource unit, which is padded with information by the first type of terminal, is the same as the trimmed resource unit.

In the case where the first type of terminal pads the information corresponding to the resource unit, when the first type of terminal processes the PDCCH, the processing will be based on the size of the first CORESET configured by the network device.

In summary, the method provided in this embodiment configures, for the first type of terminal, a first CORESET with a frequency domain width larger than the receiving bandwidth of the control channel supported by the first type of terminal, and also provides a corresponding PDCCH resource mapping scheme and PDCCH receiving scheme, so that the eRedCap UE can be configured with a CORESET with the same structure as the terminal of the normal bandwidth. Thereby, the structure of the existing CORESET is enabled to be compatible with the small-bandwidth terminal without changing the structure of the existing CORESET.

### For the second case above

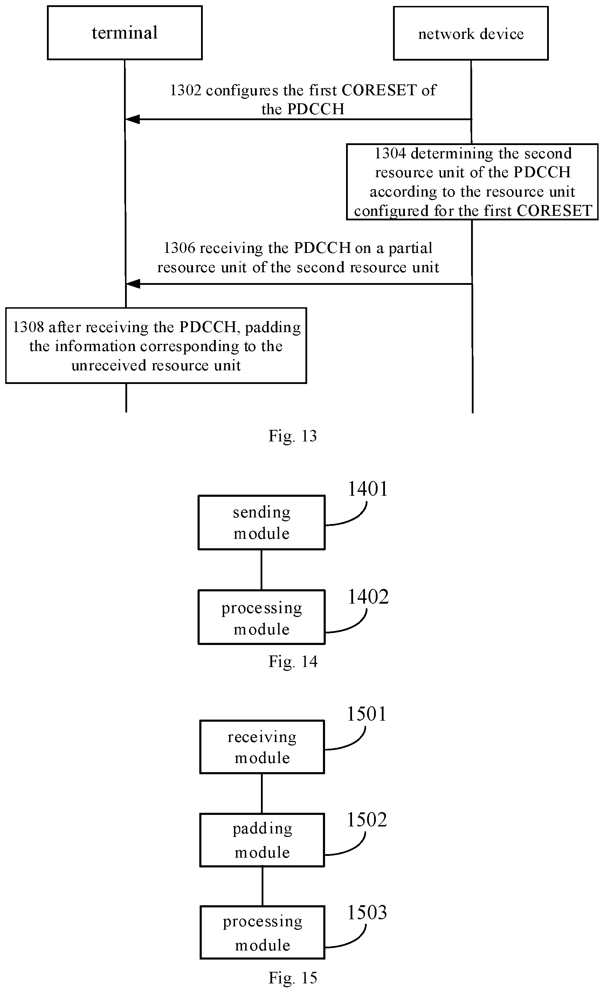

Fig. 13 shows a flow chart of a downlink transmission method provided by an embodiment of the present disclosure. The method may be applied to the communication system shown in Fig. 2. The method includes steps 1302, 1304, 1306, and 1308.

Step 1302: the network device configures the first CORESET of the PDCCH for the first type of terminal.

The frequency domain width of the first CORESET configured by the network device for the first type of terminal is greater than the receiving bandwidth of the control channel supported by the first type of terminal. That is, the bandwidth of the resource unit of the PDCCH in frequency domain as determined according to the first CORESET is greater than the receiving bandwidth of the control channel supported by the first type of terminal.

Optionally, the type information of the first type of terminal is different from the type information of the second type of terminal and the type information of the third type of terminal, and the terminal capabilities of the second type of terminal and the third type of terminal are greater than the terminal capability of the first type of terminal.

Optionally, the first type of terminal is an eRedCap UE, the second type of terminal is a RedCap UE, and the third type of terminal is a non-lightweight terminal (also referred to as a normal terminal). The maximum transceiving bandwidth supported by the eRedCap UE is less than the maximum transceiving bandwidth supported by the RedCap UE and the maximum transceiving bandwidth supported by the non-lightweight terminal. The non-lightweight terminal is a terminal other than the eRedCap UE and the RedCap UE.

Step 1304: the network device determines the second resource unit of the PDCCH according to the resource unit configured for the first CORESET.

Optionally, the network device performs resource mapping for the PDCCH from CCE to REG according to the resource unit configured for the first CORESET to obtain the second resource unit occupied by the PDCCH. The network device may implement resource mapping for the PDCCH from CCE to REG according to the resource unit configured for the first CORESET, so as to obtain the REG constituting the PDCCH located in the CORESET, that is, to obtain the second resource unit.

Step 1306: the first type of terminal receives the PDCCH sent by the network device on a partial resource unit of the second resource unit.

The second resource unit is a resource unit configured for the first CORESET. The frequency domain width of the partial resource unit is not greater than the receiving bandwidth of the control channel supported by the first type of terminal. Optionally, the frequency domain width of the partial resource unit is equal to the receiving bandwidth of the control channel supported by the first type of terminal.

Optionally, the partial resource unit includes at least one of the following:
- a resource unit determined by the first type of terminal;
- a resource unit indicated by the network device.

Optionally, the network device indicates the partial resource unit in the second resource unit by sending an indication message to the first type of terminal. The first type of terminal determines the partial resource unit according to actual conditions or a preset rule. For example, the preset rule indicates that the first type of terminal determines the partial resource unit at the head of the second resource unit according to the bandwidth of the control channel supported by the first type of terminal.

Step 1308: after receiving the PDCCH, the first type of terminal pads the information corresponding to the unreceived resource unit.

In the case where the network device does not trim the resource unit, but obtains the second resource unit of the PDCCH by mapping according to the first CORESET, the first type of terminal will receive the PDCCH according to the partial resource unit of the second resource unit, and pad the information corresponding to the unreceived resource unit, thereby obtaining the complete PDCCH information.

It should be noted that the information corresponding to the resource unit not received by the first type of terminal is useful information, or the resource unit not received by the first type of terminal does not carry information. In the case where the unreceived resource unit carries useful information, since the network device uses channel coding for the transmission of PDCCH information, the first type of terminal can correct some errors in the transmission through channel coding. Therefore, even if part of the useful information of the PDCCH is not received by the first type of terminal, the first type of terminal can still rely on channel coding to recover the above useful information.

Optionally, after receiving the PDCCH, the first type of terminal will use a preset bit to pad the information corresponding to the unreceived resource unit. For example, the preset bit is 0 or 1. Optionally, the collection including the resource unit, which is padded with information by the first type of terminal, and the partial resource unit is the second resource unit. That is, the resource unit, which is padded with information by the first type of terminal, is the differential resource unit between the partial resource unit and the second resource unit.

Optionally, when the first type of terminal processes PDCCH, such as demodulation and de-resource mapping, it will pad the information corresponding to the resource unit that has not been received. In the case where the first type of terminal pads the information corresponding to the resource unit, when the first type of terminal processes PDCCH, the processing will be based on the size of the first CORESET configured by the network device. For example, the first type of terminal performs de-resource mapping for PDCCH according to the information corresponding to the second resource unit.

In summary, the method provided in this embodiment configures, for the first type of terminal, a first CORESET with a frequency domain width larger than the receiving bandwidth of the control channel supported by the first type of terminal, and also provides corresponding PDCCH resource mapping scheme and PDCCH receiving scheme, so that the eRedCap UE can be configured with the same structure of CORESET as the terminal of the normal bandwidth. Thereby, the structure of the existing CORESET is enabled to be compatible with the small-bandwidth terminal without changing the structure of the existing CORESET.

It should be noted that the order of the steps of the method(s) provided in the embodiments of the present disclosure may be appropriately adjusted, the steps may also be increased or decreased according to the situation(s), and different steps may be freely combined to form a new embodiment. A skilled person in the art shall easily think of a change within the technical scope disclosed in the present disclosure, which should be covered within the protection scope of the present disclosure, and thus will not be repeated.

Fig. 14 shows a structural block diagram of a downlink transmission apparatus provided by an example embodiment of the present disclosure. As shown in Fig. 14, the apparatus includes:
a sending module 1401, used for configuring a first CORESET of a PDCCH for a first type of terminal.

The frequency domain width of the first CORESET is greater than the receiving bandwidth of the control channel supported by the first type of terminal.

In an optional implementation, the apparatus also includes:
a processing module 1402, used for processing the resource mapping for the PDCCH in a first processing mode in response to the first CORESET configured for the first type of terminal.

In an optional implementation, the first resource unit occupied by the PDCCH is acquired by trimming the second resource unit configured for the first CORESET. The bandwidth of the first resource unit is not greater than the receiving bandwidth of the control channel supported by the first type of terminal.

In an optional implementation, the first resource unit is acquired by the apparatus trimming the second resource unit according to the receiving bandwidth of the control channel supported by the first type of terminal.

In an optional implementation, the processing module 1402 is used for:
performing resource mapping for the PDCCH from CCE to REG on the second resource unit according to the configuration of the first CORESET,
trimming the second resource unit according to the receiving bandwidth of the control channel supported by the first type of terminal, to obtain the first resource unit.

In an optional implementation, the sending module 1401 is used for:
discarding the information corresponding to the trimmed resource unit when the apparatus sends the PDCCH on the first resource unit.

In an optional implementation, the processing module 1402 is used for:
trimming the second resource unit according to at least one of the following granularities:
RE;
REG;
REG bundle;
N REGs;
CCE.

In an optional implementation, the trimmed resource unit includes at least one of the following:
a resource unit indicated by the upper network;
a resource unit determined by the apparatus according to a preset rule.

In an optional implementation, the trimmed resource unit includes at least one of the following: continuous resource units;
dispersed resource units.

In an optional implementation, the trimmed resource unit remains fixed in time domain, or varies in time domain.

In an optional implementation, the second resource unit occupied by the PDCCH is a resource unit configured for the first CORESET.

In an optional implementation, the processing module 1402 is used for:
performing resource mapping for the PDCCH from CCE to REG on the second resource unit according to the configuration of the first CORESET.

In an optional implementation, the sending module 1401 is used for:
sending the PDCCH on the second resource unit.

In an optional implementation, the type information of the first type of terminal is different from the type information of the second type of terminal and the type information of the third type of terminal. The terminal capabilities of the second type of terminal and the third type of terminal are greater than the terminal capability of the first type of terminal.

In an optional implementation, the first type of terminal is an eRedCap UE, the second type of terminal is a RedCap UE, and the third type of terminal is a non-lightweight terminal.

The maximum transceiving bandwidth supported by the eRedCap UE is less than the maximum transceiving bandwidth supported by the RedCap UE and the maximum transceiving bandwidth supported by the non-lightweight terminal. The non-lightweight terminal is a terminal other than the eRedCap UE and the RedCap UE.

Fig. 15 shows a structural block diagram of a downlink transmission apparatus provided by an example embodiment of the present disclosure. As shown in Fig. 15, the apparatus includes:
a receiving module 1501, for receiving the first CORESET of the PDCCH configured by the network device.

The frequency domain width of the first CORESET is greater than the receiving bandwidth of the control channel supported by the apparatus.

In an optional implementation, the receiving module 1501 is used for:
receiving the PDCCH sent by the network device on the first resource unit.

The first resource unit is acquired by the network device trimming the second resource unit, the second resource unit is a resource unit configured for the first CORESET, and the bandwidth of the first resource unit is not greater than the receiving bandwidth of the control channel supported by the apparatus.

In an optional implementation, the first resource unit is acquired by the network device trimming the second resource unit according to the receiving bandwidth of the control channel supported by the apparatus.

In an optional implementation, the apparatus further includes:
a padding module 1502, used for padding the information corresponding to the trimmed resource unit after receiving the PDCCH.

In an optional implementation, the padding module 1502 is used for:
using a preset bit to pad the information corresponding to the trimmed resource unit after receiving the PDCCH.

In an optional implementation, the receiving module 1501 is used for:
receiving the PDCCH sent by the network device on a partial resource unit of the second resource unit.

The second resource unit is a resource unit configured for the first CORESET, and the frequency domain width of the partial resource unit is not greater than the receiving bandwidth of the control channel supported by the apparatus.

In an optional implementation, the apparatus also includes:
a padding module 1502, used for padding the information corresponding to the unreceived resource unit after receiving the PDCCH.

In an optional implementation, the padding module 1502 is used for:
using a preset bit to pad the information corresponding to the unreceived resource unit after receiving the PDCCH.

In an optional implementation, the partial resource unit includes at least one of the following:
a resource unit determined by the apparatus;
a resource unit indicated by the network device.

In an optional implementation, the preset bit is 0 or 1.

In an optional implementation, the apparatus also includes:
a processing module 1503, used for performing de-resource mapping for the PDCCH according to the information corresponding to the second resource unit.

In an optional implementation, the type information of the apparatus is different from the type information of the second type of terminal and the type information of the third type of terminal, and the terminal capabilities of the second type of terminal and the third type of terminal are both greater than the terminal capability of the apparatus.

In an optional implementation, the apparatus is an eRedCap UE, the second type of terminal is a RedCap UE, and the third type of terminal is a non-lightweight terminal.

The maximum transceiving bandwidth supported by the eRedCap UE is less than the maximum transceiving bandwidth supported by the RedCap UE and the maximum transceiving bandwidth supported by the non-lightweight terminal. The non-lightweight terminal is a terminal other than the eRedCap UE and the RedCap UE.

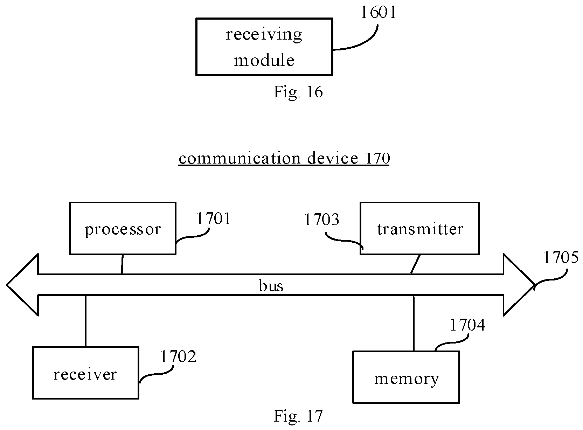

Fig. 16 shows a block diagram of a downlink transmission apparatus provided by an example embodiment of the present disclosure. As shown in Fig. 16, the apparatus includes:
a receiving module 1601, used for receiving, on the target resource unit, the PDCCH in the first CORESET configured by the network device.

The frequency domain width of the first CORESET is greater than the receiving bandwidth of the control channel supported by the apparatus, and the bandwidth of the target resource unit is not greater than the receiving bandwidth of the control channel supported by the apparatus.

In an optional implementation, the target resource unit is a first resource unit, and the first resource unit is acquired by the network device trimming the second resource unit configured for the first CORESET.

In an optional implementation, the target resource unit is a partial resource unit of the second resource unit, and the second resource unit is a resource unit configured by the network device for the first CORESET.

It should be noted that when the apparatus provided in the above embodiment realizes functions thereof, it is only illustrated by the division of the above functional modules. In actual applications, the above function allocation may be completed by different functional modules according to actual needs. That is, the content structure of the apparatus is divided into different functional modules to complete all or part of the functions described above.

Regarding the apparatus in the above embodiment(s), the specific way in which each module performs the operation has been described in detail in the embodiment(s) of the method, and will not be elaborated here.

Fig. 17 shows a schematic structural diagram of a communication device (terminal or network device) provided by an example embodiment of the present disclosure. The communication device 170 includes: a processor 1701, a receiver 1702, a transmitter 1703, a memory 1704, and a bus 1705.

The processor 1701 includes one or more processing cores. The processor 1701 executes various functional applications and information processing by running software programs and modules.

The receiver 1702 and the transmitter 1703 may be implemented as a communication component, which may be a communication chip.

The memory 1704 is connected to the processor 1701 via the bus 1705.

The memory 1704 may be used to store at least one instruction. The processor 1701 is used to execute the at least one instruction to implement the various steps in the above method embodiment(s).

In addition, the memory 1704 may be implemented by any type of volatile or non-volatile storage device or a combination thereof. The volatile or non-volatile storage device includes but is not limited to: a disk or an optical disk, an electrically-erasable programmable read-only memory (EEPROM), an erasable programmable read-only memory (EPROM), a static random access memory (SRAM), a read-only memory (ROM), a magnetic memory, a flash memory, and a programmable read-only memory (PROM).

When the communication device is implemented as a terminal, the processor and the transceiver in the communication device involved in the embodiments of the present disclosure may be implemented together as a communication chip, or the transceiver forms a communication chip alone. The transmitter in the transceiver performs the sending step performed by the terminal in any of the methods shown above. The receiver in the transceiver performs the receiving step performed by the terminal in any of the methods shown above. The processor performs steps other than the sending and receiving steps, which will not be repeated here.

When the communication device is implemented as a network device, the processor and transceiver in the communication device involved in the embodiments of the present disclosure may be implemented together as a communication chip, or the transceiver may form a communication chip alone. The transmitter in the transceiver performs the sending step performed by the network device in any of the methods shown above. The receiver in the transceiver performs the receiving step performed by the network device in any of the methods shown above. The processor performs steps other than the sending and receiving steps, which will not be repeated here.

In an example embodiment, a computer-readable storage medium is also provided, in which at least one instruction, at least one program, code set, or instruction set is stored. The at least one instruction, the at least one program, the code set, or the instruction set is loaded and executed by the processor to implement the downlink transmission method provided by the above-mentioned various method embodiments.

In an example embodiment, a chip is also provided. The chip includes a programmable logic circuit and/or a program instruction. When the chip is running on a communication device, it is used to implement the downlink transmission method provided by the above-mentioned various method embodiments.

In an example embodiment, a computer program product is also provided. When the computer program product runs on a processor of a computer device, the computer device executes the above-mentioned downlink transmission method.

Those skilled in the art should be aware that in one or more of the above examples, the functions described in the embodiments of the present disclosure may be implemented by hardware, software, firmware, or any combination thereof. When implemented using software, these functions may be stored in a computer-readable medium or transmitted as one or more instructions or codes on a computer-readable medium. The computer-readable medium includes computer storage medium and communication medium. The communication medium includes any medium that facilitates the transmission of computer programs from one place to another. The storage medium may be any available medium that can be accessed by a general or special-purpose computer.

The above is only an example embodiment of the present disclosure and is not intended to limit the present disclosure. Any modifications, equivalent substitutions, improvements, etc. made within the spirit and principle of the present disclosure shall be included in the protection scope of the present disclosure.

## Claims

1. A downlink transmission method, performed by a network device and comprising:
configuring a first control resource set CORESET of a physical downlink control channel PDCCH for a first type of terminal, wherein
a frequency domain width of the first CORESET is greater than a receiving bandwidth of a control channel supported by the first type of terminal.

2. The method according to claim 1, further comprising:
in response to the first CORESET configured for the first type of terminal, processing resource mapping for the PDCCH in a first processing mode.

3. The method according to claim 2, wherein
a first resource unit occupied by the PDCCH is acquired by trimming a second resource unit configured for the first CORESET; and
a bandwidth of the first resource unit is not greater than the receiving bandwidth of the control channel supported by the first type of terminal.

4. The method according to claim 3, wherein
the first resource unit is acquired by the network device trimming the second resource unit according to the receiving bandwidth of the control channel supported by the first type of terminal.

5. The method according to claim 4, wherein processing the resource mapping for the PDCCH in the first processing mode comprises:
according to configuration of the first CORESET, performing the resource mapping for the PDCCH from control channel element CCE to resource element group REG on the second resource unit;
trimming the second resource unit according to the receiving bandwidth of the control channel supported by the first type of terminal to acquire the first resource unit.

6. The method according to claim 5, further comprising:
discarding information corresponding to a trimmed resource unit when the network device sends the PDCCH on the first resource unit.

7. The method according to claim 5, wherein trimming the second resource unit comprises:
trimming the second resource unit according to at least one of the following granularities:
resource element RE;
REG;
REG bundle;
N REGs; or
CCE.

8. The method according to claim 5, wherein the trimmed resource unit comprises at least one of:
a resource unit indicated by an upper network; or
a resource unit determined by the network device according to a preset rule.

9. The method according to claim 5, wherein the trimmed resource unit includes at least one of:
continuous resource units; or
dispersed resource units.

10. The method according to claim 5, wherein the trimmed resource unit remains fixed or varies in time domain.

11. The method according to claim 2, wherein the second resource unit occupied by the PDCCH is a resource unit configured for the first CORESET.

12. The method according to claim 11, wherein processing the resource mapping for the PDCCH in the first processing mode comprises:
according to configuration of the first CORESET, performing the resource mapping for the PDCCH from CCE to REG on the second resource unit.

13. The method according to claim 12, further comprising:
sending the PDCCH on the second resource unit.

14. The method according to any one of claims 1 to 13, wherein
type information of the first type of terminal is different from type information of a second type of terminal and type information of a third type of terminal, and
terminal capabilities of the second type of terminal and the third type of terminal are both greater than a terminal capability of the first type of terminal.

15. The method according to claim 14, wherein
the first type of terminal is an enhanced lightweight terminal eRedCap UE, the second type of terminal is a lightweight terminal RedCap UE, and the third type of terminal is a non-lightweight terminal; and
the maximum transceiving bandwidth supported by the eRedCap UE is less than the maximum transceiving bandwidth supported by the RedCap UE and the maximum transceiving bandwidth supported by the non-lightweight terminal, and the non-lightweight terminal is a terminal other than the eRedCap UE and the RedCap UE.

16. A downlink transmission method, performed by a first type of terminal and comprising:
receiving a first CORESET of a PDCCH configured by a network device, wherein
a frequency domain width of the first CORESET is greater than a receiving bandwidth of a control channel supported by the first type of terminal.

17. The method according to claim 16, further comprising:
receiving the PDCCH sent by the network device on a first resource unit, wherein
the first resource unit is acquired by the network device trimming a second resource unit, the second resource unit is a resource unit configured for the first CORESET, and a bandwidth of the first resource unit is not greater than the receiving bandwidth of the control channel supported by the first type of terminal.

18. The method according to claim 17, wherein
the first resource unit is acquired by the network device trimming the second resource unit according to the receiving bandwidth of the control channel supported by the first type of terminal.

19. The method according to claim 17, further comprising:
padding information corresponding to a trimmed resource unit after receiving the PDCCH.

20. The method according to claim 19, wherein padding the information corresponding to the trimmed resource unit after receiving the PDCCH, comprises:
after receiving the PDCCH, using a preset bit to pad the information corresponding to the trimmed resource unit.

21. The method according to claim 16, further comprising:
receiving the PDCCH sent by the network device on a partial resource unit of the second resource unit, wherein
the second resource unit is a resource unit configured for the first CORESET, and a frequency domain width of the partial resource unit is not greater than the receiving bandwidth of the control channel supported by the first type of terminal.

22. The method according to claim 21, further comprising:
padding information corresponding to an unreceived resource unit after receiving the PDCCH.

23. The method according to claim 22, wherein padding the information corresponding to the unreceived resource unit after receiving the PDCCH, comprises:
after receiving the PDCCH, using a preset bit to pad the information corresponding to the unreceived resource unit.

24. The method according to claim 21, wherein the partial resource unit comprises at least one of:
a resource unit determined by the terminal; or
a resource unit indicated by the network device.

25. The method according to claim 20 or 23, wherein the preset bit is 0 or 1.

26. The method according to claim 20 or 23, further comprising:
performing de-resource mapping for the PDCCH according to information corresponding to the second resource unit.

27. The method according to any one of claims 16 to 24, wherein
type information of the first type of terminal is different from type information of a second type of terminal and type information of a third type of terminal, and
terminal capabilities of the second type of terminal and the third type of terminal are greater than a terminal capability of the first type of terminal.

28. The method according to claim 27, wherein
the first type of terminal is an eRedCap UE, the second type of terminal is a RedCap UE, and the third type of terminal is a non-lightweight terminal; and
the maximum transceiving bandwidth supported by the eRedCap UE is less than the maximum transceiving bandwidth supported by the RedCap UE and the maximum transceiving bandwidth supported by the non-lightweight terminal, and the non-lightweight terminal is a terminal other than the eRedCap UE and the RedCap UE.

29. A downlink transmission method, performed by a first type of terminal and comprising:
receiving, on a target resource unit, a PDCCH in a first CORESET configured by a network device, wherein
a frequency domain width of the first CORESET is greater than a receiving bandwidth of a control channel supported by the first type of terminal, and a bandwidth of the target resource unit is not greater than the receiving bandwidth of the control channel supported by the first type of terminal.

30. The method according to claim 29, wherein
the target resource unit is a first resource unit, and
the first resource unit is acquired by the network device trimming a second resource unit configured for the first CORESET.

31. The method according to claim 29, wherein
the target resource unit is a partial resource unit of the second resource unit, and
the second resource unit is a resource unit configured by the network device for the first CORESET.

32. A downlink transmission apparatus, comprising:
a sending module for configuring a first CORESET of a PDCCH for a first type of terminal, wherein
a frequency domain width of the first CORESET is greater than a receiving bandwidth of a control channel supported by the first type of terminal.

33. A downlink transmission apparatus, comprising:
a receiving module for receiving a first CORESET of a PDCCH configured by a network device, wherein
a frequency domain width of the first CORESET is greater than a receiving bandwidth of a control channel supported by the apparatus.

34. A downlink transmission apparatus, comprising:
a receiving module for receiving, on a target resource unit, a PDCCH in a first CORESET configured by a network device, wherein
a frequency domain width of the first CORESET is greater than a receiving bandwidth of a control channel supported by the apparatus, and a bandwidth of the target resource unit is not greater than the receiving bandwidth of the control channel supported by the apparatus.

35. A network device, comprising:
a processor;
a transceiver connected to the processor; and
a memory for storing executable instructions for the processor, wherein
the processor is configured to load and execute the executable instructions to implement the downlink transmission method according to any one of claims 1 to 15.

36. A terminal, comprising:
a processor;
a transceiver connected to the processor; and
a memory for storing executable instructions for the processor, wherein
the processor is configured to load and execute the executable instructions to implement the downlink transmission method according to any one of claims 16 to 31.

37. A computer-readable storage medium, having executable instructions stored therein, wherein the executable instructions are loaded and executed by a processor to implement the downlink transmission method according to any one of claims 1 to 31.

38. A chip, comprising a programmable logic circuit or a program, wherein the chip is used for implementing the downlink transmission method according to any one of claims 1 to 31.
